# EUROPÄISCHE PATENTSCHRIFT

(11) **EP 2 354 593 B1**
(45) Veröffentlichungstag und Bekanntmachung des Hinweises auf die Patenterteilung: **28.08.2013**
(21) Anmeldenummer: 11000455.3
(22) Anmeldetag: 21.01.2011
(51) Int. Cl.: F16H 1/28, F16H 1/46, F16H 7/02

(54) **Zahnriehmengetriebe**
Timing belt gear box
Engrenage à courroie dentée

(30) Priorität: 22.01.2010 DE 102010006158
(43) Veröffentlichungstag der Anmeldung: 10.08.2011
(73) Patentinhaber: Technische Universität Dresden, 01069 Dresden (DE)
(72) Erfinder: Nagel, Thomas Dipl.-Ing., 01737 Tharandt (DE); Richter, Stefan Dipl.-Ing., 01099 Dresden (DE)
(74) Vertreter: Kailuweit & Uhlemann Patentanwälte

(56) Entgegenhaltungen:
- DE-A1- 1 750 431
- DE-A1- 2 851 113
- DE-A1- 3 213 655
- DE-A1- 3 829 863
- DE-A1- 19 611 589

## Beschreibung

Die Erfindung betrifft ein hochübersetzendes Zahnriemengetriebe gemäß dem Oberbegriff des Anspruchs 1 zur Übertragung einer rotatorischen Bewegung in eine rotatorische Bewegung.

Aus der DE 38 29 863 A1 ist ein Getriebe mit einem oder mehreren gleichzeitig wirkenden konstanten Übersetzungsverhältnissen bekannt. Ein endloses, biegsames Ringband ist in der Weise ausgeführt, dass es zwei oder mehr unterschiedliche Wirkdurchmesser mit einem zusammenhängenden Querschnitt besitzt und eine kraftschlüssige Verbindung zwischen koaxial angeordneten und einzeln gelagerten Rädern bzw. Hohlrädern mit unterschiedlichen Wirkdurchmessem herstellt, Auf diese Weise können gleichzeitig zwei oder mehr unterschiedliche Abtriebszahlen mit hohen Übersetzungen erzeugt werden.

Aus der DE 43 41 572 C1 ist ein Zahnriemengetriebe bekannt, das neben der Übertragung einer rotatorischen in eine translatorische Bewegung auch zur Übertragung einer rotatorischen in eine rotatorische Bewegung geeignet ist. Das Zahnriemehgetriebe besteht aus zwei nebeneinander angeordneten Zahnriemengetrieben, mit wenigstens je einem Antriebs-, Abtriebs- und Umlenkrad. Wenigstens ein Antriebs-, bzw. Abtriebsradpaar ist fest miteinander verbunden. Die Produkte aus den Zähnezahlen der Räder der Radpaare und der Teilungen der zugehörigen unterschiedlich geteilten Zahnreihen unterscheiden sich geringfügig voneinander. Das Getriebe erhält seine Übersetzung durch den Produktunterschied. Je geringer der Produktwnterschied ist, umso höher ist die Übersetzung. Nachteilig bei dieser Bauart zur Übertragung einer rotatorischen in eine rotatorische Bewegung ist, dass das Zahnriemengetriebe relativ viel Platz benötigt.

In der gattungsgemäßen DE 196 11 589 C2 ist ein weiteres Zahnriemengetriebe beschrieben, bei dem zwei zentrische Räder als Losrad und Festrad axial hintereinander angeordnet sind. Ein Steg ist koaxial zur Achse von Losrad und Festrad antreibbar gelagert. Umlenkräder sind im Steg drehbar gelagert und umkreisen mit dem Steg das Los- und Festrad.

Bei diesem Zahnriemengetriebe sind auf der Antriebsseite vier Zahnscheiben auf dem Steg vorgesehen. Der Zahnriemen auf der Antriebsseite muss alle vier Zahnscheiben und das Festrad umschlingen. Die Bauart erfordert einen zweifach verzahnten Zahnriemen und beansprucht diesen mit einer Biegewechselbelastung,

Aus DE321 3655A1 , DE 1702145U und DE2513004A1 sind Getriebe bekannt, welche Übersetzungen mit Hilfe von umlaufenden Zahnscheiben und Riemen erzeugen. Dabei werden feststehende Sonnenräder (Scheiben) eingesetzt, um welche ein Riemen bei Antrieb des Steges abläuft. Nachteil solcher Aufbauten besteht in der zwingend auftretenden Zugbelastung des Riemens. Die Kräfte im Getriebe werden entlang der frei laufenden Trume Im Riemen übertragen. Dies erfordert den Einsatz von Spann- und Umlenkrollen, belastet die Zugmittel im Riemen und führt zu erhöhtem Verschleiß bei Biegewechselbelastung.

Aus DE 8513152U1 und AT188461B sind Umlaufscheibengetriebe bekannt, welche Zahnriemen benutzen, und dieser mit einer innenverzahnten Scheibe zusammenarbeitet. Diese kann dabei Gehäusefest (DE8513152U1) oder nicht gehäusefest (AT188461B) ausgebildet sein. Nachteilig bei den genannten Anwendungen ist das notwendige Sonnenrad (Scheibe), welches zu einer Biegewechselbelastung des Riemens führt. Weiterhin wird der Einsatz von Umlenkrollen notwendig. Zusätzlich gilt auch für diese Varianten, dass der Riemen auf Zug belastet wird. Es bilden sich Last- und Leertrum aus, der Riemen muss mit Vorspannung versehen werden. Es wird der Einsatz von Spannrollen notwendig. Der Zugstrang im Riemen wird, besonders bei wechselnder Biegerichtung, belastet.

Die Aufgabe der Erfindung besteht darin, ein hochübersetzendes Zahnriemengetriebe einfacher Bauart anzugeben, welches den Zahnriemen nicht mit einer Biegewechselbelastung beansprucht, insgesamt schlank ausgeführt ist und sich in unterschiedlichen Varianten betreiben lässt. Weiterhin soll das Getriebe ohne die Bildung von Last- und Leertrum arbeiten.

Erfindungsgemäß wird die Aufgabe durch ein Getriebe mit den im Anspruch 1 oder 2 genannten Merkmalen gelöst. Vorteilhafte Varianten des Getriebes ergeben sich aus den in den Unteransprüchen genannten Merkmalen.

Bei dem erfndungsgemäßen Getriebe handelt es sich um einen Drehzahl-, Drehmoment-Umformer mit umlaufenden Zahnriemen. Die An- und Abtriebsscheiben der Zahnriemen lagern gehäusefest oder auf sich drehenden Bauteilen.

Das Getriebe besitzt einen Steg, dessen Ende drehbar gelagert ist. Auf diesem Steg befinden sich am gegenüberliegenden Ende mindestens 2 Zahnscheiben. Die Zahnscheiben treten immer als Paar auf. Sie sind verdrehfest zueinander und drehbar auf dem Steg gelagert. Es können mehrere Paare dieser Zahnscheiben vorgesehen werden. Der Steg dient zum Antrieb des Getriebes.

Weiterhin besteht das Getriebe aus mindestens einer ersten Scheibe, die gehäusefest, zentrisch montiert und als Zahnscheibe oder Zahnhohlscheibe ausgebildet ist.

Außerdem besteht das Getriebe aus einer weiteren Scheibe, die drehbar, zentrisch gelagert und als Zahnhohlscheibe ausgebildet ist und als Abtrieb dient.

Weiterhin besteht das Getriebe aus mindestens zwei Zahnriemen. Die Zahnriemen greifen beide in jeweils eine der beiden auf dem Steg drehbar gelagerten und zueinander verdrehfesten Zahnscheiben ein. Der Zahnriemen kann einseitig oder auf Vorder- und Rückseite mit einer Verzahnung ausgeführt sein. Der erste Zahnriemen greift jeweils in die Zahnscheibe oder Zahnhohlscheibe sowie in alle vorhandenen Scheiben der einen Getriebeseite ein. Der zweite Zahnriemen greift immer in die Zahnhohlscheibe sowie in alle vorhandenen Scheiben des Getriebes ein, das neben dem ersten Getriebe angeordnet ist. Auch hier kann die wirksame Verzahnung wechseln.

Bei einer ersten Bauart ist die gehäusefeste Scheibe als Zahnscheibe ausgebildet. Die als Abtrieb vorgesehen Scheibe ist als Zahnhohlscheibe ausgebildet. Ein zweiseitig verzahnter Zahnriemen steht mit einer Scheibe des Zahnscheibenpaars in Eingriff und greift mit der anderen Seite der Verzahnung kämmend in die als Zahnhohlscheibe ausgebildete Scheibe ein.

Bei einer zweiten Bauart sind beide Scheiben als Zahnhohlscheiben ausgebildet. Beide Zahnriemen sind beidseitig verzahnt und stehen mit einer Seite mit dem Zahnscheibenpaar in Eingriff und mit der jeweils anderen Seite mit einer der beiden Hohlscheiben.

Das Getriebe ist durch einen rückführenden Aufbau gekennzeichnet, und arbeitet durch die Verwendung von Zahnhohlscheiben auf der Abtriebsseite oder der An- und Abtriebsseite sowie durch die direkte, Ober den Riemen stattfindende Kraftübertragung von den Stegscheibe auf die Zahnhohlscheiben ohne den Einsatz von Spann- und Umlenkrollen, ohne Zugbelastung der Zugstränge und ohne Biegewechselbelastung der Riemen.

Durch die Verwendung von Zahnholscheiben lassen sich die Kräfte durch den Riemen hindurch, direkt auf die Stegscheiben übertragen. Damit werden die Bildung von Last-und Leertrum am Zahnriemen vermieden.

Die Erfindung wird nachfolgend an Hand von Ausführungsbeispielen näher erläutert. In den Zeichnungen zeigen:
- Fig.1: eine schematische Darstellung aller Komponenten eines erfindungsgemäßen Getriebes sowie deren Anordnung
- Fig. 2: eine erste Bauart des Getriebes
- Fig. 3: eine zweite Bauart des Getriebes
- Fig. 4 bis 6: verschiedene Abwandlungen der ersten Bauart
- Fig. 7 bis 9: verschiedene Abwandlungen der zweiten Bauart

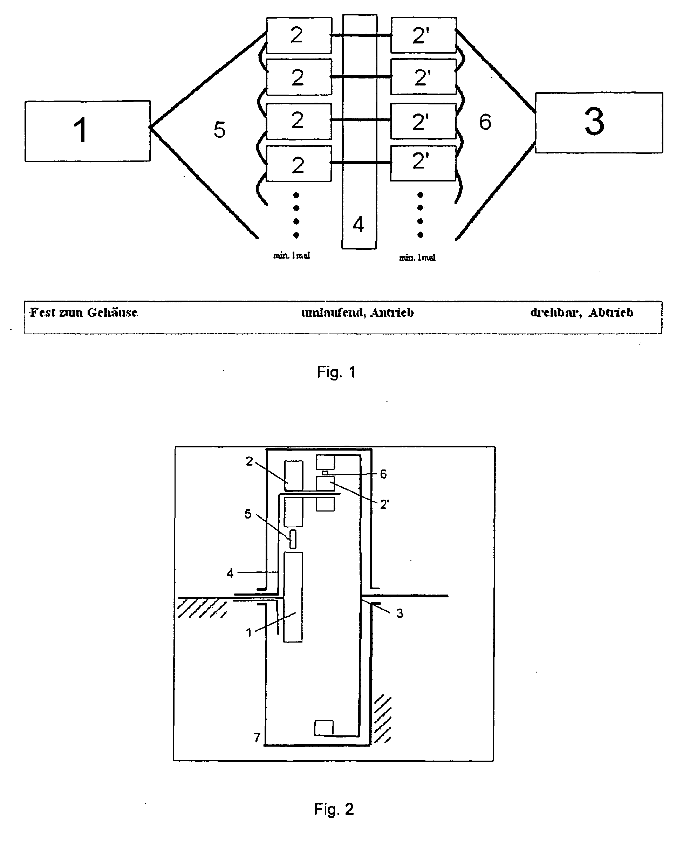

In der Fig. 1 sind schematisch alle Komponenten eines erfindungsgemäßen Getriebes sowie deren Anordnung dargestellt. Jedes nachfolgend dargestellte Getriebe besitzt diesen grundlegenden Aufbau.

In der Fig. 2 ist eine erste Bauart eines erfindungsgemäßen Getriebes dargestellt. Das Getriebe besitzt einen drehbar gelagerten Steg 4, welcher als Antrieb dient. Auf diesem Steg 4 befinden sich mindestens zwei Zahnscheiben, Zahnscheibe 2 und Zahnscheibe 2'. Die Zahnscheiben 2 und 2' sind verdrehfest zueinander und drehbar auf dem Steg 4 gelagert. Weiterhin besteht das Getriebe aus einer gehäusefesten, zentrisch montierten Scheibe 1, die als Zahnscheibe ausgebildet ist. Außerdem besteht das Getriebe aus einer drehbar, zentrisch gelagerten Scheibe 3, die als Zahnhohlscheibe ausgebildet ist und als Abtriebsscheibe dient. Der Zahnriemen 5 weist eine einfache Verzahnung auf und greift direkt in die Scheiben ein. Der Riemen 2 weist eine doppelte Verzahnung auf und greift mit der eine Seite der Verzahnung in die Zahnscheiben 2' und mit der anderen Seite der Verzahnung in die als Hohlscheibe ausgebildete Scheibe 3 ein.

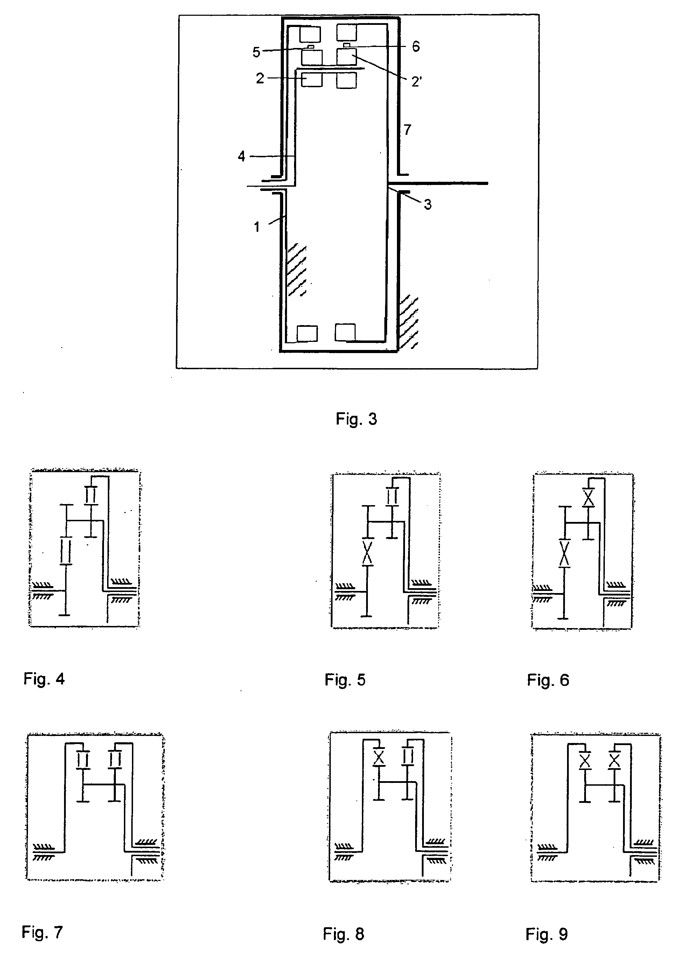

In der Fig. 3 ist eine zweite Bauart des erfindungsgemäßen Getriebes dargestellt. Das Getriebe besitzt einen drehbar gelagerten Steg 4, welcher als Antrieb dient. Auf diesem Steg 4 befinden sich mindestens zwei Zahnscheiben, Zahnscheibe 2 und Zahnscheibe **2'.** Die Zahnscheiben 2 und 2' sind verdrehfest zueinander und drehbar auf dem Steg 4 gelagert, Weiterhin besteht das Getriebe aus einer gehäusefesten, zentrisch montierten Scheibe 1, die als Zahnhohlscheibe ausgebildet ist. Außerdem besteht das Getriebe aus einer drehbar, zentrisch gelagerten Scheibe 3, die ebenfalls als Zahnhohlscheibe ausgebildet ist und als Abtriebsscheibe dient. Der Zahnriemen **5** weist eine doppelte Verzahnung auf und greift mit der eine Seite der Verzahnung in die Zahnscheibe 2 und mit der anderen Seite der Verzahnung in die als Hohlscheibe ausgebildete Scheibe 1 ein. Der Zahnriemen 6 weist ebenfalls eine doppelte Verzahnung auf und greift mit der eine Seite der Verzahnung in die Zahnscheibe 2' und mit der anderen Seite der Verzahnung in die als Hohlscheibe ausgebildete Scheibe 3 ein. Die als Hohlscheibe ausgebildete Scheibe 3 dient als Abtrieb. Die Besonderheit der zweiten Bauart besteht darin, dass beide Zahnriemen 5, 6 in Hohlscheiben einlaufen.

In Fig. 4 bis 6 sind Abwandlungen der in Fig. 2 beschriebenen ersten Bauart des Getriebes dargestellt.

So zeigt Fig. 4 einen wie in Fig. 2 bereits beschriebenen Aufbau. Die Scheibe 1 ist gehäusefest und als einfache Zahnscheibe ausgebildet. Die Scheibe 3 ist als Zahnhohlscheibe ausgebildet und dient als Abtrieb. Der Zahnriemen 5 ist einseitig verzahnt und greift mit seiner Verzahnung in die Scheibe 1 und die Zahnscheibe 2 ein. Der Zahnriemen 6 ist zweiseitig verzahnt und greift mit der einen Seite der Verzahnung in die Zahnscheibe 2' und mit der anderen Seite der Verzahnung in die Innenverzahnung der Scheibe 3 ein.

Fig. 5 stellt einen zu Fig. 4 analogen Aufbau dar. Der Zahnriemen 5 weist eine doppelte Verzahnung auf. Die eine Seite der Verzahnung greift in Scheibe 1 und die andere Seite der Verzahnung greift in Zahnscheibe 2 ein.

Fig. 6 stellt einen weiteren zu Fig. 4 analogen Aufbau dar. Beide Zahnriemen 5 und 6 weisen eine doppelte Verzahnung auf.

**In** Fig. 7 bis 9 sind Abwandlungen der in Fig. 3 beschriebenen zweiten Bauart des Getriebes dargestellt.

So zeigt Fig. 7 einen wie in Fig. 3 bereits beschriebenen Aufbau. Die Scheibe 1 ist gehäusefest und als innenverzahnte Zahnhohlscheibe ausgebildet. Die Scheibe 3 ist ebenfalls als innenverzahnte Zahnhohlscheibe ausgebildet und dient als Abtrieb. Der Zahnriemen 5 ist beidseitig verzahnt und greift mit der einen Seite der Verzahnung in die Scheibe 1 und mit der anderen Seite der Verzahnung in die Zahnscheibe 2 ein. Der Zahnriemen 5 ist ebenfalls beidseitig verzahnt und greift mit der einen Seite der Verzahnung in die Zahnscheibe 2' und mit der anderen Seite der Verzahnung in die Innenverzahnung der Scheibe 3 ein,

Fig. 8 stellt einen zu Fig. 7 analogen Aufbau dar. Der Zahnriemen 5 weist eine doppelte Verzahnung auf.

Fig. 9 stellt einen weiteren zu Fig. 7 analogen Aufbau dar. Beide Zahnriemen 5 und 6 weisen eine doppelte Verzahnung auf.

### Bezugszeichenliste

- 1: - gehäusefeste Scheibe
- 2: - Zahnscheibe
- 2': - Zahnscheibe
- 2, 2': - gekoppeltes Zahnscheibenpaar
- 3: - Scheibe
- 4: - Steg
- 5: - erster Zahnriemen
- 6: - zweiter Zahnriemen
- 7: - Gehäuse

## Patentansprüche

1. Zahnriemengetriebe, aufweisend ein Gehäuse (7), eine gehäusefeste Scheibe (1), einen umlaufenden Steg (4) mit mindestens einem gekoppelten Zahnscheibenpaar (2, 2'), eine Scheibe (3), einen ersten einfach oder zweifach verzahnten Zahnriemen (5) und einen zweiten einfach oder zweifach verzahnten Zahnriemen (6), die mit dem gekoppelten Zahnscheibenpaar (2, 2') in Eingriff stehen und mit diesen zwei nebeneinander angeordnete Zahnriemengetriebe bilden, wobei sich der Steg (4) von einem zentrisch zum Gehäuse (7) liegenden Antrieb zu dem gekoppelten Zahnscheibenpaar (2, 2') erstreckt, und das mindestens eine gekoppelte Zahnscheibenpaar (2, 2') mit dem Steg (4) um oder in die/der gehäusefeste(n) Scheibe (1) rotiert,
**dadurch gekennzeichnet, dass**
die gehäusefeste Scheibe (1) als Zahnscheibe ausgebildet ist, die eine Scheibe (3) als Zahnhohlscheibe ausgebildet und gegenüber der gehäusefesten Scheibe (1) angeordnet ist, wobei der erste Zahnriemen (5) mit der Zahnscheibe (2) des gekoppelten Zahnscheibenpaars (2, 2') und der gehäusefesten Scheibe (1) in Eingriff steht, der zweite Zahnriemen (6) zwei fach verzahnt ist und mit der einen Seite mit der zweiten Scheibe (2') des gekoppelten Zahnscheibenpaares in Eingriff steht und der anderen Seite des zweiten Zahnriemens (6) kämmend in die als Zahnhohlscheibe ausgebildete Scheibe (3) eingreift.

2. Zahnriemengetriebe nach Anspruch 1,
**dadurch gekennzeichnet, dass** die gehäusefeste Scheibe (1) als Zahnhohlscheibe ausgebildet ist, der Zahnriemen (5) doppelt verzahnt ist und mit der einen Seite mit der Scheibe (2) in Eingriff steht und mit der anderen Seite des Zahnriemens (5) kämmend in die als Zahnhohlscheibe ausgebildete Scheibe (1) eingreift.

3. Zahnriemengetriebe nach einem der Ansprüche 1 oder 2, **dadurch gekennzeichnet, dass** für den kämmenden Eingriff von Zahnriemen (5) und/oder Zahnriemen (6) das Getriebe frei von Spann- und Umlenkrollen aufgebaut ist.

4. Zahnriemengetriebe nach Anspruch 1, **dadurch gekennzeichnet, dass** um die gehäusefeste Welle eine antreibbare Hohlwelle angeordnet ist, die mit dem umlaufenden Steg (4) verbunden ist.

5. Zahnriemengetriebe nach Anspruch 2, **dadurch gekennzeichnet, dass** der Antrieb für den Steg (4) zentrisch durch die als Hohlscheibe ausgebildeten Scheibe (1) geführt ist.

## Claims

1. Toothed belt transmission comprising a casing (7), a disk (1) fixed relative to the casing, a rotating cage (4) with at least one pair of coupled toothed disks (2, 2'), a disk (3), a first single-toothed or double-toothed belt (5) and a second single-toothed or double-toothed belt (6) engaged with the pair of coupled toothed disks (2, 2'), forming two adjacent toothed belt transmissions together with the pair of coupled toothed disks (2, 2'), wherein the cage (4) extends from a drive located centrally to the casing (7) up to the pair of coupled toothed disks (2, 2') and the at least one pair of coupled toothed disks (2, 2') with the cage (4) rotates around or in the casing-fixed disk (1), **characterized by that** the casing-fixed disk (1) is established as toothed disk, the one disk (3) is established as internally toothed disk located opposite to the casing-fixed disk (1), wherein the first toothed belt (5) is engaged with the toothed disk (2) of the pair of coupled toothed disks (2, 2') and the casing-fixed disk (1), the second toothed belt (6) is double-toothed, with one side engages with the second disk (2') of the pair of coupled toothed disks (2, 2') and, said second toothed belt (6), with the other side engages meshing with the disk (3) that is established as internally toothed disk.

2. Toothed belt transmission to claim 1 **characterized by that** the casing-fixed disk (1) is established as internally toothed disk, the toothed belt (5) is established double-toothed with one side engaging with the disk (2) and, said toothed belt (5), with the other side engaging meshing with the disk (1) that is established as internally toothed disk.

3. Toothed belt transmission to one of the claims 1 or 2 **characterized by that** for the meshing engagement of toothed belt(s) (5) and/or toothed belt(s) (6) the transmission is designed free of tensioning or return pulleys.

4. Toothed belt transmission to claim 1 **characterized by that** around the casing-fixed shaft a drivable hollow shaft is arranged connected to the rotating cage (4).

5. Toothed belt transmission to claim 2 **characterized by that** the drive of the cage (4) is centrally run through the disk (1) established as hollow disk.

## Revendications

1. Mécanisme de transmission à courroie dentée, présentant un carter (7), un disque (1) solidaire du carter, une branche rotative (4) dotée d'au moins une paire de disques dentés accouplés (2, 2'), un disque (3), une première courroie dentée (5) à denture simple ou double et une deuxième courroie dentée (6) à denture simple ou double, qui sont en prise avec la paire de disques dentés accouplés (2, 2') et forme avec ces disques deux transmissions à courroie dentée juxtaposées, sachant que la branche (4) s'étend depuis un entraînement situé de manière centrée par rapport au carter (7) jusqu'à la paire de disques dentés accouplés (2, 2'), et que la paire de disques dentés accouplés au moins unique (2, 2') tourne avec la branche (4) autour du disque (1) solidaire du carter ou dans ce dernier,
**caractérisé en ce que** le disque (1) solidaire du carter est réalisé sous forme de disque denté, et le disque (3) est réalisé sous forme de disque creux denté et est disposé en vis-à-vis du disque (1) solidaire du carter, sachant que la première courroie dentée (5) est en prise avec le disque denté (2) de la paire de disques dentés accouplés (2, 2') et avec le disque (1) solidaire du carter, et que la deuxième courroie dentée (6) est à denture double et est en prise par un côté avec le deuxième disque (2') de la paire de disques dentés accouplés et, par l'autre côté de ladite deuxième courroie dentée (6), s'engage en engrènement dans le disque (3) réalisé sous forme de disque creux denté.

2. Mécanisme de transmission à courroie dentée selon la revendication 1, **caractérisé en ce que** le disque (1) solidaire du carter est réalisé sous forme de disque creux denté, la courroie dentée (5) est à denture double et est en prise par un côté avec le disque (2) et, par l'autre côté de ladite courroie dentée (5), s'engage en engrènement dans le disque (1) réalisé sous forme de disque creux denté.

3. Mécanisme de transmission à courroie dentée selon la revendication 1 ou 2, **caractérisé en ce que**, pour l'engagement par engrènement de la courroie dentée (5) et/ou de la courroie dentée (6), le mécanisme de transmission est réalisé sans galets tendeurs et de renvoi.

4. Mécanisme de transmission à courroie dentée selon la revendication 1, **caractérisé en ce qu'**un arbre creux entraînable, qui est relié à la branche rotative (4), est disposé autour de l'arbre solidaire du carter.

5. Mécanisme de transmission à courroie dentée selon la revendication 2, **caractérisé en ce que** l'entraînement pour la branche (4) est dirigé de manière centrée à travers le disque (1) réalisé sous forme de disque creux.
